Europäisches Patentamt

European Patent Office

Office européen des brevets

(19)

(11) Veröffentlichungsnummer : **0 067 340**
**B1**

(12) **EUROPÄISCHE PATENTSCHRIFT**

(45) Veröffentlichungstag der Patentschrift :
05.09.84

(21) Anmeldenummer : **82104678.6**

(22) Anmeldetag : **27.05.82**

(51) Int. Cl.³ : **H 04 L   9/02**, H 04 K   1/02

(54) **Verfahren zur Schlüsselübertragung.**

(30) Priorität : **11.06.81 DE 3123168**

(43) Veröffentlichungstag der Anmeldung :
**22.12.82 Patentblatt 82/51**

(45) Bekanntmachung des Hinweises auf die Patenterteilung : **05.09.84 Patentblatt 84/36**

(84) Benannte Vertragsstaaten :
**GB NL**

(56) Entgegenhaltungen :
**DE-B- 1 207 426**
**DE-B- 2 706 421**
**GB-A- 2 050 021**

(73) Patentinhaber : **SIEMENS AKTIENGESELLSCHAFT**
**Berlin und München Wittelsbacherplatz 2**
**D-8000 München 2 (DE)**

(72) Erfinder : **Markwitz, Wernhard, Dipl.-Ing.**
**Thalkirchnerstrasse 107**
**D-8000 München 70 (DE)**

EP 0 067 340 B1

Jouve, 18, rue St-Denis, 75001 Paris, France

## Beschreibung

Die Erfindung bezieht sich auf ein Verfahren zur Schlüsselübertragung, bei dem zwischen einer sendenden und einer empfangenden Station zur verschlüsselten Übertragung von Nachrichten ein Schlüssel vereinbart wird, und bei dem in der sendenden und in der empfangenden Station jeweils ein Schlüsselgerät enthalten ist, dem jeweils ein eigener Stationsschlüssel zugeordnet ist.

Es ist allgemein bekannt, (siehe z. B. GB-A-2 050 021) bei einer verschlüsselten Übertragung von Nachrichten zwischen zwei Stationen in diesen Stationen jeweils ein Schlüsselgerät vorzusehen. In der sendenden Station werden von einer Endeinrichtung abgegebene Nachrichten mittels des Schlüsselgeräts verschlüsselt und unter Verwendung einer Übertragungseinheit an eine Fernleitung abgegeben. In der empfangenden Station werden die mittels einer dortigen Übertragungseinheit empfangenen Nachrichten unter Verwendung des dortigen Schlüsselgeräts verschlüsselt und an eine empfangende Endeinrichtung abgegeben. Zwischen den Übertragungseinheiten können Standverbindungen oder ein Nachrichtennetz, beispielsweise ein Durchschaltewählnetz oder ein Nachrichtennetz mit speichernden Netzknoten eingeschaltet sein.

Es wird häufig gewünscht, in einem Nachrichtennetz neben einer offenen, auch eine verschlüsselte Übertragung von Nachrichten zwischen zwei beliebigen Stationen durchzuführen. Die Kenntnisnahme der Nachrichten durch Dritte soll dabei erschwert sein. Der für eine Übertragung erforderliche Schlüssel kann zwischen den Stationen im Dialog vereinbart werden. Eine Authentikation, d. h. der Nachweis, daß die Übertragung tatsächlich mit der gewünschten Station erfolgt, ist dabei jedoch nicht gewährleistet.

Der Erfindung liegt daher die Aufgabe zugrunde, ein Verfahren anzugeben, bei dessen Verwendung sichergestellt ist, daß Nachrichten nur zu der gewünschten Station übertragen werden.

Erfindungsgemäß wird die Aufgabe bei dem Verfahren der eingangs genannten Art gelöst durch die zeitliche Aufeinanderfolge folgender Verfahrensschritte

a) die sendende Station verschlüsselt den Schlüssel mit dem eigenen Stationsschlüssel und einer beiden Stationen bekannten geheimen ersten Parole und sendet ihn zur empfangenden Station,

b) die empfangende Station entschlüsselt den chiffriert übertragenen Schlüssel mit der ersten Parole verschlüsselt ihn mit dem eigenen Stationsschlüssel und einer zweiten, beiden Stationen bekannten geheimen Parole und sendet ihn zur sendenden Station zurück,

c) die sendende Station entschlüsselt den chiffrierten Schlüssel mit der zweiten Parole und dem eigenen Stationsschlüssel verschlüsselt ihn mit einer beiden Stationen bekannten geheimen dritten Parole und überträgt ihn zur empfangenden Station,

d) die empfangende Station entschlüsselt den chiffrierten Schlüssel mit der dritten Parole und dem eigenen Stationsschlüssel und erhält den Schlüssel.

Das Verfahren gemäß der Erfindung hat den Vorteil, daß auf einfache Weise und ohne eine zentrale Verteilung von Schlüsseln, eine gesicherte Übertragung von Schlüsseln zwischen den Stationen erfolgt, und es für Dritte sehr erschwert wird, von den Schlüsseln Kenntnis zu erhalten. Es ist hierzu lediglich erforderlich, beiden Stationen bekannte, geheime Parolen zu vereinbaren.

Die Sicherheit der Schlüsselübertragung wird noch weiter erhölt, wenn der Schlüssel in der sendenden Station vor der Verschlüsselung mit dem eigenen Stationsschlüssel mit einer beiden Stationen bekannten geheimen vierten Parole verschlüsselt wird, und in der empfangenden Station nach dem Entschlüsseln mit dem eigenen Stationsschlüssel mit der vierten Parole entschlüsselt wird.

Falls zwischen zwei Stationen nicht von Anfang an die Parolen vereinbart werden, ist es vorteilhaft, wenn vor der Übertragung eines Schlüssels un'er Verwendung der Parolen eine Übertragung eines Schlüssels unter Verwendung von physischen verteilten gerätespezifischen Schlüsseln erfolgt. Dies ist beispielsweise dann der Fall, wenn nach dem Herstellen einer Verbindung zwischen den beiden Stationen zunächst ein Probebetrieb aufgebaut wird oder weniger wichtige Nachrichten ausgetauscht werden.

Falls zwischen den Stationen unter Verwendung von Parolen bereits ein Schlüssel vereinbart wurde, ist es zur Erhöhung der Sicherheit der Übertragung vorteilhaft, wenn nach der Übertragung eines Schlüssels mittels der Parolen zu einem späteren Zeitpunkt weitere Schlüssel unter Verwendung von Parolen übertragen werden. Hierbei ist es günstig, wenn die Übertragung der weiteren Schlüssel mit den jeweils vorhergehenden Schlüsseln verschlüsselt erfolgt.

Zur Erhöhung der Sicherheit der übertragenen Nachrichten ist es auch vorteilhaft, wenn für jede Übertragungsrichtung ein eigener Schlüssel unter Verwendung der Parolen übertragen wird. Für beide Übertragungsrichtungen können dabei die gleichen Parolen vereinbart werden. Es erweist sich jedoch als zweckmäßig, wenn die Übertragung der Schlüssel für beide Übertragungsrichtungen unter Verwendung derselben Parolen erfolgt.

Im folgenden wird eine Durchführung des erfindungsgemäßen Verfahrens anhand von Zeichnungen näher erläutert. Es zeigen :

Figur 1 ein Blockschaltbild einer Übertragungsanordnung,

Figur 2 ein Funktionsschaltbild und

Figur 3 ein Blockschaltbild von Teilen von Schlüsselgeräten.

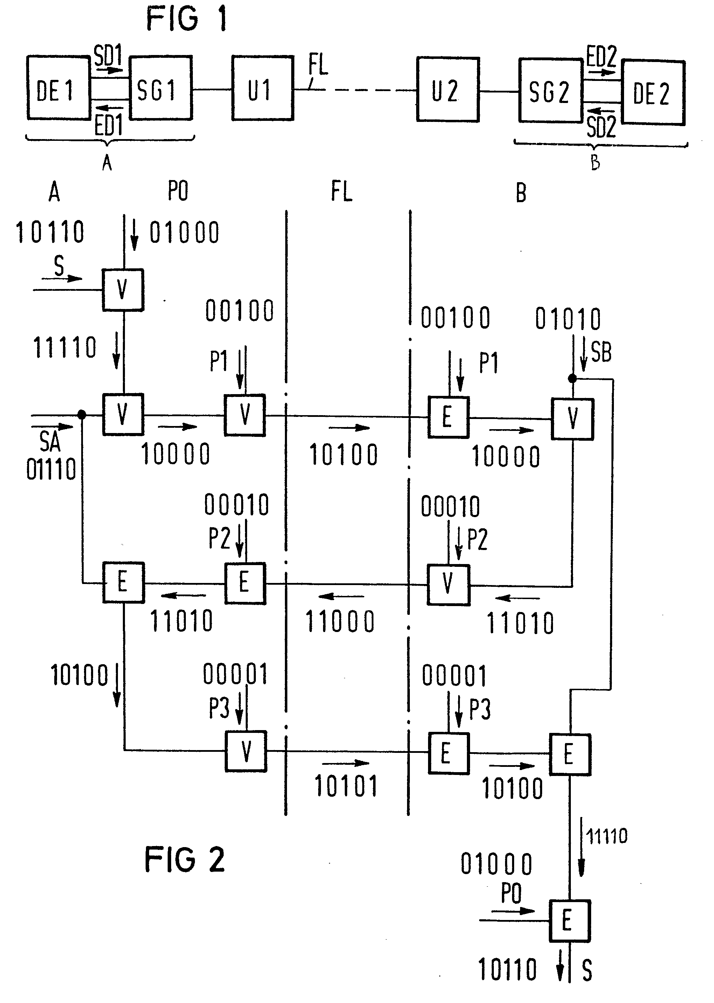

Bei der in Fig. 1 dargestellten Übertragungsanordnung werden Nachrichten, beispielsweise Daten, von einer sendenden Station A zu einer empfangenden Station B übertragen. Die Daten werden von einer Datenendeinrichtung DE1 als Sendedaten SD1 zu einem Schlüsselgerät SG1 abgegeben. Dieses verschlüsselt die Daten und überträgt sie über eine Übertragungseinheit U1 und eine Fernleitung FL zu einer Übertragungseinheit U2 der empfangenden Station B. Dort gelangen die verschlüsselten Daten an ein Schlüsselgerät SG2, das diese entschlüsselt und als Empfangsdaten ED2 an eine Datenendeinrichtung DE2 abgibt. Bei einer Übertragung von Daten in umgekehrter Richtung werden diese von der Datenendeinrichtung DE2 als Sendedaten SD2 abgegeben und im Schlüsselgerät SG2 verschlüsselt. Im Schlüsselgerät SG1 der nun empfangenden Station A werden die Daten wieder entschlüsselt und als Empfangsdaten ED1 an die Datenendeinrichtung DE1 abgegeben.

Die Ver- und Entschlüsselung der Daten in den Schlüsselgeräten SG1 und SG2 erfolgt unter Verwendung eines für den jeweils aktuellen Vorgang geltenden Schlüssels. Für eine Übertragung in beiden Richtungen kann der gleiche Schlüssel verwendet werden, oder es können unterschiedliche Schlüssel vereinbart werden. Im folgenden wird aus Gründen der Anschaulichkeit angenommen, daß nur von der senden Station A Daten zur empfangenden Station B übertragen werden. Das Schlüsselgerät SG1 in der Station A erzeugt unter Verwendung eines Zufallsgenerators den aktuellen Schlüssel und einen Stationsschlüssel SA. Mit dem Schlüssel sollen die nachfolgend übertragenen Daten verschlüsselt werden. Die Übertragung des Schlüssels erfolgt im Dialog zwischen den Stationen A und B, wobei den Stationen bekannte geheime Parolen verwendet werden, die in Speichern der Schlüsselgeräte SG1 und SG2 gespeichert sind.

Weitere Einzelheiten werden im folgenden zusammen mit dem in Fig. 2 dargestellten Funktionsschaltbild beschrieben.

Bei dem in Fig. 2 dargestellten Funktionsschaltbild sind die einzelnen Ver- und Entschlüsselungsvorgänge in den Stationen A und B durch entsprechende mit V bzw. E bezeichnete Kästchen dargestellt. Die Ver- bzw. Entschlüsselung erfolgt beispielsweise jeweils entsprechend einer modulo-2-Addition.

Wahrend des Dialogs zwischen den Stationen A und B erfolgt jeweils eine Ver- bzw. Entschlüsselung mit einer der Parolen P1 bis P3. Zusätzlich kann der Schlüssel vor der Übertragung in der Station A mit einer weiteren Parole P0 verschlüsselt und in der Station B mit dieser Parole P0 entschlüsselt werden.

Es wird vorausgesetzt, daß die Parolen P0 bis P3, die beispielsweise die dargestellten Binärwerte haben, vor der Übertragung des Schlüssels vereinbart wurden. Wenn das Schlüsselgerät SG1 einen aktuellen Schlüssel S und einen temporären Stationsschlüssel SA erzeugt hat, wird der Schlüssel S zunächst mit der Parole P0 verschlüsselt. Das Ergebnis wird anschließend mit dem Stationsschlüssel SA verschlüsselt und vor der Übertragung zur Station B zusätzlich mit der Parole P1 verschlüsselt. Die Verschlüsselung erfolgt im dargestellten Beispiel entsprechend einer modulo-2-Addition. In der Station B wird zunächst der Einfluß der Parole P1 beseitigt und der Rest wird mit einem dort erzeugten temporären Stationsschlüssel SB verschlüsselt. Dieses Chiffrat wird mit der Parole P2 verschlüsselt und an die Station A zurückgeschickt. In der Station A wird der Einfluß der Parole P2 rückgängig gemacht und der Rest wird mit dem Stationsschlüssel SA dechiffriert. Es wird dabei vorausgesetzt, daß die Chiffrier- und Dechiffrierfunktionen vertauschbar sind, was bei der modulo-2-Addition der Fall ist. Das Ergebnis der Dechiffrierung wird mit der Parole P3 modifiziert und zur Station B zurückgesendet. In der Station B wird der Einfluß der Parole P3 beseitigt un der Rest wird mit dem Stationsschlüssel SB dechiffriert. Anschließend wird der Einfluß der Parole P0 rückgängig gemacht, so daß in der Station B der Schlüssel S zur Verfügung steht und mit einer verschlüsselten Übertragung der Nachrichten begonnen werden kann.

Bei einer Übertragung von Daten in beiden Richtungen wiederholt sich der Vogang in umgekehrter Richtung, falls für diese Übertragungsrichtung ein anderer Schlüssel verwendet wird. In diesem Fall erzeugt die Station B den weiteren Schlüssel. Für die Übertragung des weiteren Schlüssels ist es möglich, die gleichen Parolen P0 bis P3 zu benutzen oder weitere Parolen zu vereinbaren. Es ist auch denkbar, die Schlüssel jeweils gleichzeitig in beiden Richtungen zu übertragen. In diesem Fall ist lediglich eine weitere Übertragung von der Station B zur Station A erforderlich.

Nach dem Austausch von Schlüsseln zwischen den Stationen A und B und einer anschließenden verschlüsselten Übertragung von Daten, können zu späteren Zeitpunkten neue Schlüssel für eine Übertragung in einer oder in beiden Richtungen mit oder ohne Parolen übertragen werden, wobei der Austausch mit dem alten Schlüssel verschlüsselt wird. Falls die Übertragung unter Verwendung von Parolen erfolgt, können dieselben Parolen oder weitere vereinbarte Parolen benutzt werden. Es ist auch möglich, vor einer Übertragung von Schlüsseln mit Hilfe von Parolen einen ersten Aufbau der Verbindungen unter Verwendung von physisch verteilten Schlüsseln herzustellen. Wenn die Übertragung dann genügend sicher ist, kann mit dem Austausch von Schlüsseln unter Verwendung von Parolen begonnen werden.

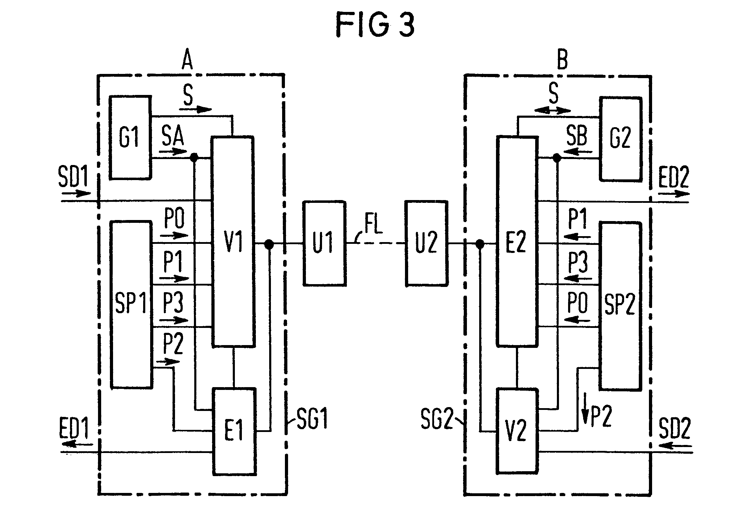

Bei dem in Fig. 3 dargestellten Blockschaltbild sind diejenigen Teile der Schlüsselgeräte SG1 und SG2 dargestellt, die für die Durchführung des Verfahrens bei der Übertragung eines Schlüssels in einer Richtung erforderlich sind. In Speichern SP1 und SP2 sind die Parolen P0 bis P3

gespeichert. Jedes Schlüsselgerät enthält einen Schlüsselgenerator G1 und G2, in dem unter Verwendung eines Zufallsgenerators die temporären Schlüssel SA bzw. SB erzeugt werden. Im Schlüsselgenerator G1 ist zusätzlich der Schlüssel S erzeugbar und speicherbar, während er im ausgeführten Beispiel im Schlüsselgenerator G2 nur speicherbar ist. In einer Verschlüsselungsstufe V1 wird der Schlüssel S entsprechend dem Funktionsschaltbild in Fig. 2 mit der Parole P0, dem Stationsschlüssel SA und der Parole P1 verschlüsselt. Das Chiffrat wird über die Übertragungseinheit U1 und die Fernleitung FL zur Übertragungseinheit U2 und das Schlüsselgerät SG2 übertragen. In einer dort vorgesehenen Entschlüsselungsstufe E2 wird das Chiffrat mit der Parole 1 entschlüsselt und mit dem Stationsschlüssel SB und der Parole P2 anschließend in einer Verschlüsselungsstufe V2 verschlüsselt. Dieses Chiffrat wird wieder über die Fernleitung FL übertragen und gelangt im Schlüsselgerät SG1 zu einer dort vorgesehenen Entschlüsselungsstufe E1, die den Einfluß der Parole P2 rückgängig macht, und den Rest mit dem Stationsschlüssel SA entschlüsselt und anschließend mit der Parole P3 verschlüsselt und zur Station B zurücküberträgt. Dort entschlüsselt die Entschlüsselungsstufe E2 das Chiffrat mit der Parole P3, dem Stationsschlüssel SB und der Parole P0 und gewinnt auf diese Weise den Schlüssel S, der im Schlüsselgenerator G2 zwischengespeichert wird. Anschließend kann mit einer Übertragung von Sendedaten SD1 begonnen werden, die mit dem Schlüssel S in der Verschlüsselungsstufe V1 verschlüsselt und mit dem gespeicherten Schlüssel S in der Entschlüsselungsstufe E2 entschlüsselt werden und als Empfangsdaten ED2 abgegeben werden. Falls derselbe Schlüssel für eine Übertragung der Daten in umgekehrter Richtung verwendet wird, werden die Sendedaten SD2 der Verschlüsselungsstufe V2 zugeführt, an der auch der Schlüssel S anliegt. In entsprechender Weise werden die verschlüsselt übertragenen Daten in der Entschlüsselungsstufe E1 unter Verwendung des Schlüssels S entschlüsselt und als Empfangsdaten ED1 abgegeben.

**Ansprüche**

1. Verfahren zur Schlüsselübertragung, bei dem zwischen einer sendenden (A) und einer empfangenden (B) Station zur verschlüsselten Übertragung von Nachrichten ein Schlüssel (S) vereinbart wird, und bei dem in der sendenden (A) und in der empfangenden (B) Station jeweils ein Schlüsselgerät (SG1, SG2) vorgesehen ist, dem jeweils ein eigener Stationsschlüssel (SA, SB) zugeordnet ist, gekennzeichnet durch die Aufeinanderfolge folgender Verfahrensschritte

a) die sendende Station (A) verschlüsselt den Schlüssel mit dem eigenen Stationsschlüssel (SA) und einer, beiden Stationen (A, B) bekannten, geheimen ersten Parole (P1) und sendet ihn zur empfangenden Station (B),

b) die empfangende Station (B) entschlüsselt den chiffriert übertragenen Schlüssel (S) mit der ersten Parole (P1) verschlüsselt ihn mit dem eigenen Stationsschlüssel (SB) und einer zweiten, beiden Stationen bekannten geheimen Parole (P2) und sendet ihn zur sendenden Station (A) zurück,

c) die sendende Station (A) entschlüsselt den chiffrierten Schlüssel (S) mit der zweiten Parole (P2) und dem eigenen Stationsschlüssel (SA) verschlüsselt ihn mit einer beiden Stationen (A, B) bekannten geheimen dritten Parole (P3) und überträgt ihn zur empfangenden Station (B),

d) die empfangende Station (B) entschlüsselt den chiffrierten Schlüssel (S) mit der dritten Parole (P3) und dem eigenen Stationsschlüssel (SB) und erhält den Schlüssel (S).

2. Verfahren nach Anspruch 1, dadurch gekennzeichnet, daß der Schlüssel (S) in der sendenden Station (A) vor der Verschlüsselung mit dem eigenen Stationsschlüssel (SA) mit einer beiden Stationen bekannten geheimen vierten Parole (P0) verschlüsselt wird, und in der empfangenden Station (B) nach dem Entschlüsseln mit dem eigenen Stationsschlüssel (SB) mit der vierten Parole (P0) entschlüsselt wird.

3. Verfahren nach Anspruch 1 oder Anspruch 2, dadurch gekennzeichnet, daß vor der Übertragung eines Schlüssels (S) unter Verwendung der Parolen (P) eine Übertragung eines Schlüssels unter Verwendung von physisch verteilten gerätespezifischen Schlüsseln erfolgt.

4. Verfahren nach einem der Ansprüche 1 bis 3, dadurch gekennzeichnet, daß nach der Übertragung eines Schlüssels (S) mittels der Parolen (P) zu einem späteren Zeitpunkt weitere Schlüssel unter Verwendung von Parolen (P) übertragen werden.

5. Verfahren nach Anspruch 4, dadurch gekennzeichnet, daß die Übertragung der weiteren Schlüssel mit den jeweils vorhergehenden Schlüsseln (S) verschlüsselt erfolgt.

6. Verfahren nach einem der Ansprüche 1 bis 5, dadurch gekennzeichnet, daß für jede Übertragungsrichtung ein eigener Schlüssel (S) unter Verwendung der Parolen (P) übertragen wird.

7. Verfahren nach Anspruch 6, dadurch gekennzeichnet, daß die Übertragung der Schlüssel für beide Übertragungsrichtungen unter Verwendung derselben Parolen (P) erfolgt.

**Claims**

1. Method of code transmission, wherein a code (S) is agreed upon between a transmitting station (A) and a receiving station (B) for the coded transmission of messages, and wherein in the transmitting station (A) and in the receiving station (B), there is respectively arranged a cipher machine (SG1, SG2), to which an individual station code (SA, SB) is assigned, characterised by the succession of the following steps

a) the transmitting station (A) encodes the code with the individual station code (SA) and a secret first catchword (P1), which is known to both stations (A, B), and transmits said code to the receiving station (B),

b) the receiving station (B) decodes the code (S), which has been transmitted in ciphered fashion, with the first catchword (P1), encodes said code with the individual station code (SB) and a second secret catchword (P2), which is known to both stations, and sends said code back to the transmitting station (A),

c) the transmitting station (A) decodes the ciphered code (S) with the second catchword (P2) and the individual station code (A, B) encodes said code with a secret third catchword (P3), which is known to both stations (A, B), and transmits said code to the receiving station (B),

d) the receiving station (B) decodes the ciphered code (S) with the third catchword (P3) and the individual station code (SB) and obtains the code (S).

2. Method as claimed in claim 1, characterised in that prior to the encoding with the individual station code (SA), in the transmitting station (A), the code (S) is encoded with a secret fourth catchword (P0), which is known to both stations, and after the decoding with the individual station code (SB), it is decoded with the fourth catchword (P0) in the receiving station (B).

3. Method as claimed in claim 1 or 2, characterised in that prior to the transmission of a code (S) by using the catchwords (P), a transmission of a code by using physically distributed apparatus-specific codes is effected.

4. Method as claimed in one of claims 1 to 3, characterised in that after transmission of a code (S) by means of the catchwords (P), further codes are transmitted at a later time by using catchwords (P).

5. Method as claimed in claim 4, characterised in that the transmission of the further codes with the respectively preceding codes (S) is effected in an encoded fashion.

6. Method as claimed in one of claims 1 to 5, characterised in that for each transmission direction an individual code (S) is transmitted by using the catchwords (P).

7. Method as claimed in claim 6, characterised in that the transmission of the codes for both transmission directions is effected by using the same catchwords (P).

**Revendications**

1. Procédé pour la transmission de clés, dans lequel est convenue entre un poste émetteur (A) et un poste récepteur (B) une clé (S) pour la transmission embrouillée d'informations, et dans lequel il est prévu, au poste émetteur (A) et au poste récepteur (B) respectivement un appareil embrouilleur (SG1, SG2) à chacun desquels est associée une clé de poste (SA, SB) qui lui est propre, caractérisé par les phases opératoires successives suivantes

a) le poste émetteur (A) embrouille la clé avec sa propre clé de poste (SA) et avec une première parole (P1) secrète et connue des deux postes (A, B) et l'envoi au poste récepteur (B),

b) le poste récepteur (B) désembrouille la clé (S) transmise de façon chiffrée à l'aide de la première parole (P1), l'embrouille avec sa propre clé de poste (SB) et d'une seconde parole secrète (P2) connue des deux postes, et la renvoie au poste émetteur (A),

c) le poste émetteur (A) désembrouille la clé (S) chiffrée avec la seconde parole (P2) et avec sa propre clé de poste (SA), l'embrouille avec une troisième parole (P3) secrète et connue des deux postes (A, B) et l'envoie au poste récepteur (B),

d) le poste récepteur (B) désembrouille la clé chiffrée (S) avec la troisième parole (P3) et sa propre clé de station (SB) et reçoit la clé (S).

2. Procédé selon la revendication 1, caractérisé par le fait que la clé (S) est embrouillée dans le poste émetteur (A), avant d'être embrouillée avec sa propre clé de poste (SA), avec une quatrième parole secrète (P0) connue par les deux postes, et est désembrouillée dans le poste récepteur (B), après avoir été désembrouillée avec sa propre clé de poste (SB), avec la quatrième parole (P0).

3. Procdédé selon la revendication 1 ou la revendication 2, caractérisé par le fait qu'avant la transmission d'une clé (S), avec utilisation des paroles (P), intervient une transmission d'une clé avec utilisation de clés spécifiques aux appareils et réparties de façon physique.

4. Procédé selon l'une des revendications 1 à 3, caractérisé par le fait qu'après la transmission d'une clé (S) à l'aide des paroles (P) on transmet à un instant ultérieur d'autres clés avec utilisation de paroles (P).

5. Procédé selon la revendication 4, caractérisé par le fait que la transmission des autres clés est opérée de façon embrouillée avec les clés respectives précédentes (S).

6. Procédé selon l'une des revendications 1 à 5, caractérisé par le fait que pour chaque sens de transmission on transmet une clé propre (S) avec utilisation des paroles (P).

7. Procédé selon la revendication 6, caractérisé par le fait que la transmission des clés pour les deux sens de transmission est opérée avec utilisation des mêmes paroles (P).

# FIG 1

# FIG 2

# FIG 3